# EUROPEAN PATENT SPECIFICATION

(11) **EP 4 311 670 B1**
(45) Date of publication and mention of the grant of the patent: **11.06.2025**
(21) Application number: 22187524.8
(22) Date of filing: 28.07.2022
(51) Int. Cl.: B32B 1/00, B32B 3/26, B32B 7/02, B32B 7/12, B32B 27/08, B32B 27/12, B32B 27/16

(54) **SEALING FILM AND PACKAGING FOR GAS OR VAPOR DECONTAMINABLE PACKAGING APPLICATIONS**
VERSIEGELUNGSFOLIE UND VERPACKUNG FÜR GAS- ODER DAMPFDEKONTAMINIERBARE VERPACKUNGSANWENDUNGEN
FILM D'ÉTANCHÉITÉ ET CONDITIONNEMENT POUR DES APPLICATIONS DE CONDITIONNEMENT DÉCONTAMINABLE DE GAZ OU DE VAPEUR

(43) Date of publication of application: 31.01.2024
(73) Proprietor: SCHOTT Pharma Schweiz AG, 9000 St. Gallen (CH)
(72) Inventor: Wolf, Patrick, 9000 St. Gallen (CH)
(74) Representative: Fuchs Patentanwälte Partnerschaft mbB

(56) References cited:
- EP-A1- 3 782 809
- WO-A1-94/19180
- US-A1- 2003 183 547
- US-A1- 2011 139 650
- US-A1- 2014 079 589

## Description

The present invention relates to a sealing film for gas or vapor decontaminable packaging applications including a container having an opening to be sealed with a film before decontamination and a packaging comprising the same. The sealing film is particularly useful for sterile storage and transport of objects for medical, pharmaceutical or cosmetic uses, in particular for sterile pharmaceutical primary packaging means, like vials, ampules, syringes, and/or cartridges.

### Background

When creating a packaging for sterile storage and transport of objects it is an essential requirement that the packaging is sterilizable and able to maintain the sterile atmosphere within the packaging. Particularly for sterile pharmaceutical primary packaging means, like vials, ampules, syringes, or cartridges, a typical packaging for the transport from a manufacturer of pharmaceutical primary packaging means to a pharmaceutical company using the same comprises a tub or tray holding a multitude of the primary packaging means which tub or tray is sealed with a non-woven. As a rule, the sealed tub or tray is then further enclosed in one or two bags. The non-woven is usually a flash spun plexifilamentary film-fibril structure made of high density polyethylene, which is known under the trademark Tyvek^{®} of the company DuPont, or a spunbonded very fine filaments non-woven.

Such selectively permeable non-wovens enable sterilization by means of gas or vapor, like ethylene oxide, steam, or hydrogen peroxide, after closing the packaging. Hence, also at least one wall of the outer enclosing bags comprises or consists of such a non-woven. While being permeable for the sterilizing gas or vapor, the selectively permeable non-woven is essentially impermeable for microbes and thus forms a microbial barrier. The majority of microbes cannot pass the non-woven filament structure. Depending on the type and density of the non-woven a different sterility assurance level can be achieved, but there is always some amount of microbes getting through. Hence, these non-wovens should be called only essentially impermeable for microbes.

At the pharmaceutical company, the sterile primary packaging means are unpacked and filled under controlled, sterile conditions. This involves so-called disinfection and/or decontamination steps at the transition from higher to lower classified clean room classes. These can, for example, be a biological decontamination using e-beam, hydrogen peroxide or wiping with an alcohol solution. Before the tub or tray is transferred to the aseptic area where the Tyvek^{®} or other non-woven sealing film is removed and the active pharmaceutical ingredient is filled into the primary packaging means, a further decontamination step takes place. This is necessary because the sterility of the outside of the tub or tray cannot be guaranteed.

In the context of the present application, decontamination is defined as an umbrella term for reducing the amount of microbes and biological agents, such as fungi, bacteria, viruses, spore forms, prions, unicellular eukaryotic organisms, etc. The special terms disinfection and sterilization differ in the amount of reduction of these. While disinfection only reduces the amount of said contaminants, sterilization effectively kills, deactivates, or eliminates all forms of life and other biological agents which are present, i.e. a reduction of 100 %. Hence, disinfection is less effective than sterilization. The required level of reduction is determined by the intended application.

While the non-woven sealing film works well regarding the assurance of the sterility of the tub or tray, there exist particularly two problems which are up to date not yet satisfactorily solved. The first problem relates to the sealing properties of the non-woven and its tear open behavior. In order to be sealable against the polymer of the tub or tray while maintaining the transit of the sterilizing medium, the non-wovens are usually dot coated with an adhesive. This adhesive layer results in a quite small sealing window which has to be met for full integrity of the sealing seam. Moreover, the sealing strength varies to a great extent with the amount the optimal sealing conditions are missed. As a consequence, the sealed non-woven may exhibit inter-layer failure during the opening process, i.e. the packaging does not open by separating the adhesive from the tub or tray but by tearing the non-woven apart. This is particularly undesirable because this way an increased amount of lint from the fibrils and filaments of the non-woven is generated which may contaminate the packaged items. Of course, this problem is even more severe with non-wovens not being provided with an adhesive layer at all.

The adhesive is also problematic as it limits the temperature range which can be used for steam sterilization. If the steam is too hot, the sealing seam may soften and fail. Moreover, during transport of the packaging, the non-sealed adhesive in the area covering the opening of the container may in consequence of the vibrations become scratched off of the non-woven by the packaged items resting on it. The formed particles may also contaminate the packaged items. This problem is increasing with age of the sealing film because aging tends to introduce brittleness to the adhesive.

Further, the adhesive coated non-wovens are often difficult to handle during the sealing process because of a tendency to build up electrostatic energy. However, the commonly employed antistatic additives must not be used for these film because they work by migrating to the surface of the polymer where they would contaminate the packaged items. In particular items used in the medical and pharmaceutical sector holding vaccines require extremely high purity levels and the absence of any contaminants and foreign matter and must meet regulated standards.

The second problem is related to the transport of vials and the like in the tubs or trays. In common practice, the vials are placed in the tubs or trays into separate pigeonholes and then the container is sealed with the non-woven. For sterilization and transport, the containers are then placed top-down into a transport rack, i.e. the vials rest with their full weight only on the non-woven. This may result in the non-woven sagging to a certain extent and the vials dropping out of their pigeonholes. In order to avoid this, the pigeonholes would have to be increased in height up to the upper rim of the container. However, this will not only require more material for the container, which in turn makes it more expensive and a lot heavier, but also result in problems when stacking the containers and when taking the vials out of the container by means of robotic grippers. Particularly when steam is used as the sterilization medium, this problem is even more enhanced.

US 2011/139650 A1 discloses a sterilizable package having a support member and a sheet material that either forms a lidding for the support member or a pouch in which the support member is disposed. The sheet material comprises a barrier material and includes breathable membrane comprising a breathable material that is pervious to moisture and gases, and impervious to microorganisms. The breathable membrane allows a sterilizing gas to be introduced into the sterilizable package. The breathable membrane is disposed towards a central portion of the sheet material and is spaced apart from any seams joining the sheet material to the support member or seams defining the pouch.

WO 94/19180 A1 discloses a flexible, air permeable, high temperature resistant, bacteria-impermeable material. The packaging material is preferably made of nonwoven polyester layers on either side of and bonded to a microporous membrane. One nonwoven is bonded to the membrane with a thermoplastic adhesive.

US 2014/079589 A1 discloses filter assemblies that comprise a temporary attachment mechanism disposed on a surface of a filter, as well as methods and systems related to using such filter assemblies during sterilization. The disclosed filter assemblies can include sterilization indicator elements.

EP 3 782 809 A1 discloses films and a packaging for gas or vapor decontaminable packaging applications and a method for creating a sterile packaging using the same. These films are particularly useful for sterile storage and transport of objects for medical, pharmaceutical or cosmetic uses, in particular of sterile pharmaceutical primary packaging means, like vials, ampules, syringes, or cartridges. Said film comprises at least a layer of a selectively permeable non-woven, a layer of a punctured film, and an adhesive which can be activated by energy transmission. Optionally it comprises further film layers. The method for creating a sterile packaging comprises the step of hermetically closing the packaging by activating the adhesive thereby making the non-woven impermeable.

US 2003/183547 A1 discloses a medical package having a tub and a lid. The tub has a foursided base with walls extending upwards therefrom; the walls terminate at a first flange which extends outwardly. From the first flange, four top walls extend upward and terminate at a second flange which extends outwardly. The tub is formed of a clear, ultraviolet light transmitting plastic. The lid has a gas permeable, microfiber central portion surrounded by a clear, ultraviolet light transmitting plastic film. The film has a high shear resistance and does not produce particulate matter during an opening procedure.

### Details of invention

It is an object of the present invention to provide a sealing film for gas or vapor decontaminable packaging applications including a container having an opening to be sealed with a film before decontamination which overcomes at least some of the drawbacks of the sealing films of the prior art.

In particular, it is one object to provide a sealing film which has a broad temperature for the sealing process (commonly referred to as a broad sealing window). A further object is to provide a sealing film which allows for a broad range of temperature for a steam sterilization. Moreover, the sealing film should have a reduced tendency towards the formation of lint and particles, particularly during the de-lidding process of the packaging. Yet another object is the provision of a sealing film which prevents the packaged items from falling out of the pigeonholes of the container while not impeding their automated detachment by means of robotic grippers.

When herein referring to a "film", this term is meant to be understood to comprise not only solid polymer films but also layers of non-wovens or combinations thereof. The term is used as an interchangeable umbrella term for both types of polymer layers of the packaging.

In this application, a "selectively permeable non-woven" is to be understood as being permeable for gases or vapors but being essentially impermeable for microbes and microorganisms and thus forming a microbial barrier. The term "essentially impermeable for microbes" within this context refers to a Microbial Barrier measured according to ASTM F1608-16 of 2-6 Log Reduction Value (LRV).

In a first aspect, the invention relates to a sealing film for gas or vapor decontaminable packaging applications including a container, preferably a rigid container, having an opening to be sealed with a film before decontamination, the sealing film consisting of or comprising at least in sequence from outside towards inside of the packaging
a) a layer of a selectively permeable non-woven being essentially impermeable for microorganisms, and
b1) a first layer of film having one or more predefined cut-out regions within an area of the sealing film which is to cover the opening of the container, or
b2) a first layer of film being essentially impermeable for the decontaminating gas or vapor, having a first needling, perforation and/or cut pattern within the area of the sealing film which is to cover the opening of the container,
wherein the layer of a selectively permeable non-woven a) and the first layer of film b1) or b2) are bonded by a sealing seam which is configured and arranged at least partially subject to and non-overlapping with a sealing seam area for sealing the opening of the container, and
wherein the first layer of film b1) or b2) has monoaxial or biaxial heat shrink properties, wherein the shrink in one or both directions is 20 %-55 % when determined according to DIN 55543-4:2017-03.

The inventors have ascertained that a design of the sealing film as a multi-layer film instead of the adhesive covered non-woven provides far superior results. Thus, advantageously the adhesive is replaced with a solid polymer film comprising one or more layers. This allows for a fine-tuning of the sealing properties in relation to different container materials, a well-defined opening mechanism, and the avoidance of the formation of particles and lint. In order to maintain the permeability of the non-woven for the sterilization medium, the film to be joined to the non-woven may have two different designs.

A first alternative, designated as b1) above, uses a film having one or more window-like cut-out regions. These windows are positioned such way that they spare out an area above the opening of the container in order to allow the sterilization medium to enter the container, i.e. when fixed to the opening of the container, the non-woven layer is at least not fully covered by the impermeable film within the area of the opening. The cut-out region(s), each or together, should generally have a size as large as possible in order to allow unobstructed entry of the sterilization medium. However, smaller cut-outs may also be used if a little increased sterilization time is acceptable and/or the impermeable covering of at least a partial area is desired. For the sealing process, a small "frame" of film within the sealing area with the container opening is sufficient. Hence, a single cut-out region having almost the size of the opening of the container is preferred. There only has to be enough film area left for a sealing with the rim of the container, i.e. its sealing area around the opening, and a sealing seam for joining it with the non-woven.

There are two options proposed for arranging the sealing seam for joining the film with the non-woven, which also applies to the other alternative for the first layer of film b2). It is essential that it is non-overlapping with the sealing seam area for sealing the opening of the container because then the sealing of the sealing film on the rim of the container would have to be made on the already existing sealing seam.

The sealing seam may be arranged within the area which is to cover the opening of the container. The sealing film may in this case be dimensioned like the opening if it is used as pre-cut sheets or on a roll with the same width as the container opening. The latter is to be preferred for automatic packaging. After being placed on the rim of the container, the sealing film is then sealed to it with a sealing seam which is just outside the contour of the sealing seam joining the film with the non-woven. This has the advantage that no sealing film extends over the contours of the container which might cause difficulties in handling the closed package and increases material costs.

In the alternative, the sealing seam for joining the film with the non-woven may be arranged just outside the area which is to cover the opening of the container. As a consequence, the sealing film has to be adequately larger sized than the container opening. The sealing seam fixing the sealing film on the sealing area of the container will then be positioned just inside the contour of the sealing seam joining the film with the non-woven.

If desired as a precautionary measure or if the non-sealed edge of the film causes jamming during the film positioning, the two alternatives may also be combined with an additional sealing seam around the contours of the cut-out region(s). This might be particularly useful for designs comprising more than one cut-out region or a cut-out region which is considerably smaller than the opening of the container. However, it is not necessary in other embodiments.

A second alternative, designated as b2) above, uses a film being essentially impermeable for the decontaminating gas or vapor, having a first needling, perforation and/or cut pattern within the area of the sealing film which is to cover the opening of the container. The film will then cover the whole non-woven layer and allow the entry of the sterilization medium through its needling, perforation and/or cut pattern. Regarding the joining sealing seam between the film and the non-woven, the same as for the alternative b1) applies, wherein an additional sealing seam around the cut-out regions is of course not applicable in this case.

In preferred embodiments, the sealing film further comprises in sequence from outside towards inside of the packaging after the first layer b2)
c) an adhesive layer which can be activated by energy transmission, covering the entire surface of a layer underneath or being arranged in patterns,
d) a second layer of film being essentially impermeable for the decontaminating gas or vapor, having a second needling, perforation and/or cut pattern being incongruent with the first needling, perforation and/or pattern.

With these additional layers, the sealing film is able to provide the further function of a hermetic sealing of the container after sterilization. The hermetic sealing of the structure is effected by activation of the adhesive between the first layer of film and the second layer of film. It is important that the first and second needling, perforation and/or cut patterns are incongruent. This can either be achieved by using two different patterns or by using the same pattern but shifting the position. Preferably, there are no intersecting patterns between the two layers in order to avoid a direct linear path from outside to inside of the film. Patterns which have proven themselves to be useful for this purpose are, for example, labyrinth-like patterns, comb-like patterns, or sufficiently spaced apart stripe patterns.

Regarding the needling, perforation and/or cut patterns used in the two layers of film there exist various options for arranging them. They may be arranged over the whole surface of the films in an intermeshing style when viewed through the combined films, like described above. This has the advantage of very short paths to travel for the decontaminating gas or vapors between the two film layers and, hence, an increased breathability of the packaging. However, the mechanical strength of the film layers decreases with the density of the patterns. For this variant it is also possible to cover only limited areas of the films creating a window-like surface which allows the decontaminating gas and vapors to enter the package only in these predefined areas.

As an alternative, the needling, perforation and/or cut patterns may be arranged in separate areas of the combined film layers. For example, the patterns may be arranged in the first layer of film to cover only an area on the left side of the opening of the container and in the second layer of film to cover only an area on the right side of the opening of the container while the middle of the opening of the container contains no patterns at all.

Preferably, activation of the adhesive layer by energy transmission can be effected through heat, UV irradiation, IR irradiation, induction, and/or microwave irradiation. The type of energy transmission is selected to fit the type of adhesive. The adhesives may, for example, be a hot melt adhesive or a reactive system, like polyurethane or poly(meth)acrylate adhesives. Reactive systems usually contain an additive, such as a photoinitiator or a radical initiator, and can thus be activated by UV or IR radiation or heat. A system which can be activated by induction typically contains a nano-scaled ferromagnetic additive. Heat sealable adhesives can, for example, be based on ethylene-vinyl acetate copolymers or ionomers.

In a particularly preferred embodiment, the adhesive is a hot melt heat sealable adhesive system containing additives which are responsive to the energy transmission.

In an embodiment, the selectively permeable nonwoven is a flash spun plexifilamentary film-fibril structure or a spunbonded very fine filaments nonwoven. Preferably, the diameter of the very fine filaments is in either case in the range of 0.5 - 10 µm. One example of such a non-woven material is Tyvek^{®} of the company DuPont. A particularly suitable type for this application is Tyvek^{®} 1073B.

Preferably, the selectively permeable non-woven is made of high density polyethylene (HDPE), polypropylene (PP), or polyethylene terephthalate (PET).

According to the invention, the first layer of film b1) or b2) has monoaxial or biaxial heat shrink properties. In preferred embodiments, the second layer of film d) has monoaxial or biaxial heat shrink properties. Producing the film layers with shrink properties will help to counteract the sagging of the non-woven during sterilization and transport of the container in an upside-down position. Particularly when using steam as the sterilization fluid, this feature has a pronounced effect. The increased temperature of the steam allows for a broad selection of polymers and production parameters for the film. Moreover, the temperature of the steam is high enough to cause also a noticeable shrink of the commonly deep drawn trays which worsens the sagging of the sealing film which has been sealed onto them before treatment. However, also other sterilization media are used at elevated temperatures which are sufficient to exceed the shrink initiation temperature. Hence, this option not only applicable to the steam sterilization. Apart from that it would also be possible to use a separate heating step, for example with an IR lamp or a common shrink tunnel, for initiation of the shrinking. Of course, the advantage of the sealing film of this embodiment is more pronounced with steam since it does not require any additional steps.

In order to get the best results regarding the sagging, it may be beneficial to decrease the size of the cut-out region or to use several cut-out regions which spare areas which form a strap-like band between the transverse sides of the opening of the container. This assures that the shrinking film layer will exert enough forces to counteract the sagging and stabilize the packaged items.

In this context it is to be noted that the effect of the shrinking film layer acts independently from the sagging non-woven layer due to the fact that the sealing films according to the invention are not a laminated structure fully bonded over their entire surface but only joined by sealing seams on their periphery and optionally around the window-like cut-outs. While the non-woven layer will still sag after the film layers have shrunk, the effect of the fixation of the packaged items is nevertheless restored. Hence, the design of the sealing film is essential for this function. If the non-woven layer and the film layers were fully laminated, the achieved effect would be much smaller because the non-woven would impede the shrink of the film layers.

The shrink of the first layer of film b1) or b2) in one or both directions is 20 %-55 %. The shrink of the second layer of film d) in one or both directions preferably is 20 %-55 %. The shrink of the first layer of film b1) or b2) and/or the second layer of film d) in one or both directions more preferably is 25 %-50 % or 30 %-45 % when determined according to DIN 55543-4:2017-03.

Preferably, the first layer of film b1) or b2) and/or the second layer of film d) is a blown film which has been produced with a blow up ratio of 1:2.5 - 1:10, preferably 1:4 - 1:6, and/or with a take-off ratio of 1:2 - 1:8, preferably 1:3 - 1:5. Within these ranges, optimal shrinking properties of the films can be created for the application in the sealing film. In particular the double bubble procedure is a suitable way of production.

In further embodiments, the first layer of film b1) or b2) or the second layer of film d) is made of a film comprising two or more layers. This allows for different functionalities of the sealing film. The film may for example be adapted to the non-woven and the container material regarding seal strength and compatibility, in particular when a tie layer is used as a third layer between two other film layers. By suitable choice of the polymers, it is possible to ascertain that the sealing seam will separate between the film layer and the container when the sealing film is removed from the package while the non-woven will not be damaged. This way the formation of lint and particles can effectively be reduced.

In a particularly preferred variant of those functionalities, the first layer of film b1) or b2) or the second layer of film d) is peelable. If the layer of the sealing film which is to be sealed against the container is designed as a peelable layer, the container may be easily opened without the formation of lint from the non-woven or particles from the film layer. Moreover, it is possible to adjust the peel force to a level which secures the closure of the container while still allowing a convenient opening. In particular, the peel force may be adapted to the size of the container and consequently the packaged items in view of the resulting weight which rests on the sealing film during the sterilization process and the transport.

The peel force may be determined according to DIN 55529:2012-09 in a T-peel test with samples having a width of 15 mm. Generally, a peel force in the range of 6 N/15 mm - 10 N/15 mm, known as the "easy peel" range, or 10 N/15 mm - 15 N/15 mm, known as the "peel" range, has proven itself to be suitable. The person skilled in the art is well aware of different measures for influencing the peel force. Some examples of influencing parameters are the sealing temperature and the sealing time for the final film and during production of the film the temperature of the melt, the frost line in the bubble, the die gap, the blow up ratio, the take-off ratio, and, of course, the composition and materials.

A design of the first layer of film b1) or b2) or the second layer of film d) as an at least three layer film is advantageous in this case. A core layer of the polymer of choice can then be provided with the peelable layer towards the inside of the packaging and with a layer of strong sealing polymers, like ionomers, metallocene catalyzed polyethylenes (LLDPE C6, C8, MDPE, HDPE), or linear low density polyethylenes (C4, C6, C8), towards the non-woven layer on the outside of the packaging. As may be required, suitable tie layers can be provided between these layers. This setup ascertains a strong bond of the polymer layer to the non-woven and an easy to open bond to the container which results in the best choice for avoiding lint and particles.

Preferably, the first layer of film b1) or b2) or the second layer of film d) comprises or consists of a layer comprising a polyolefin plastomer, isotactic polybutylene-1, and/or an ethylene propylene copolymer. With these types of polymers, a suitable peeling behavior and peel force can be generated. As customary in the art, they may be used alone or together with a different matrix polymer (for example low density polyethylene) and, as need may be, in conjunction with suitable tie layers.

In embodiments, the film of the first layer of film b1) or b2) or the second layer of film d) comprises or is made of polyethylene, polypropylene, polyamide 6, polyethylene terephthalate or their blends and/or copolymers.

In a second aspect, the invention relates to a use of a sealing film according to the invention for steam decontaminated packaging of a container. As has been detailed above, the sealing film according to the invention has particular advantages when used in conjunction with steam as the decontamination medium.

In a third aspect, the invention relates to a packaging for decontaminated packaging of objects comprising a tub, optionally comprising a nest, or a tray, which is sealed with a sealing film according to the invention.

In preferred embodiments of the packaging, the tub or tray comprises or is made of polystyrene, high impact polystyrene, polyethylene, polycarbonate, polyethylene terephthalate - glycol copolymer, polypropylene, or polyvinyl-chloride or their blends and/or copolymers.

In a fourth aspect, the invention relates to a use of a packaging according to the invention for decontaminated packaging of objects for medical, pharmaceutical or cosmetic uses.

### Description of the Figures

- **Figure 1**: is a top-down view of a sealing film according to the invention having a cut-out region when viewed from the inside of the packaging.
- **Figure 2**: is a top-down view of a sealing film according to the invention having a cut pattern when viewed from the inside of the packaging.

### Examples

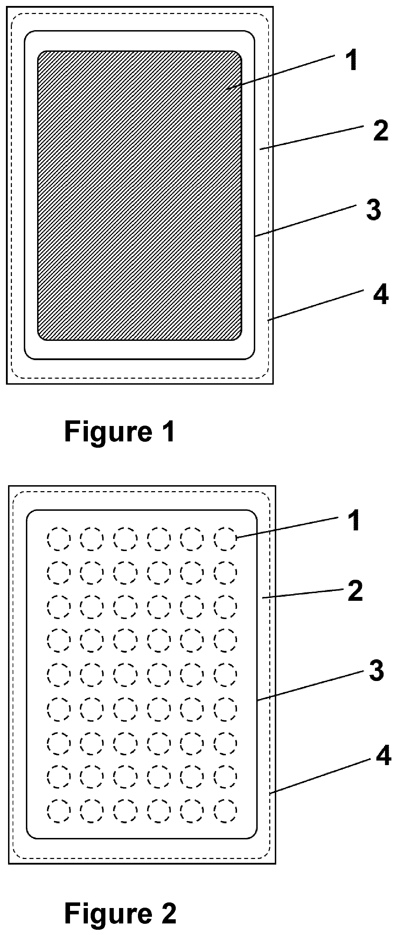

A first example of a sealing film according to the invention is shown in **Figure 1** which is a view from inside-out of the packaging in order to be able to see all layers. The lowest layer in the figure (the crosshatched area) is the layer of a selectively permeable non-woven (1) which is only partially visible through the layers above. Its size is equal to the size of the layers above, i.e. it extends to the surrounding rectangle in Figure 1. In this example, a layer of Tyvek^{®} 1073B has been used.

The first layer of film (2), which is sealed to the layer of a selectively permeable non-woven (1) by means of the sealing seam (3), has been made using a layer of high density polyethylene and a tie layer of an ionomer arranged on the side facing the container. The sealing seam (3) is arranged around the periphery of the window-like cut-out region through which the layer of a selectively permeable non-woven (1) is visible in the figure. The dashed line marks the sealing seam area (4) where the sealing seam will be placed when sealing the sealing film to the container, i.e. the line essentially is identical to the contours of the rim of the opening of the container.

The size of the sealing film, which is shown in Figure 1 as a single sheet, corresponds to the size of the container. Hence, the sealing seam area (4) is placed near the outer edges of the sealing film and outside of the sealing seam (3). For the alternative design of the sealing film, the positions of sealing seam (3) and sealing seam area (4) would be switched and the size of the sealing film would have to be made correspondingly larger. If used from a roll instead of pre-cut sheets, either on the large or small sides of the depicted sheet the next sheet will follow on the roll and has to be cut off during the sealing process.

Not shown in Figure 1 is the container which would complete the packaging. In this example, it has been a tray made of polypropylene. For packing, for example, vials, the vials are placed into the tray, the sealing film is positioned on the tray with the sealing seam area (4) on the rim of its opening and then sealed onto the tray. Thereafter, the packaging may be put in a rack with the sealing film facing downwards and subjected to a steam sterilization process. When opening the packaging, the sealing film will separate cleanly from the tray without tearing filaments out of the non-woven.

**In** **Figure 2****,** there is shown another example of a sealing film dimensioned as in Figure 1. It differs from the sealing film of the first example in that the first layer of film (2) has no window-like cut-out regions but covers the whole surface of the layer of a selectively permeable non-woven (1) and instead has a cut pattern in the form of circles arranged in an array. Hence, the layer of a selectively permeable non-woven (1) is visible in the figure only through these cuts in the circles (the dashes of the circles) which consequently have been marked with reference numeral 1. The position of sealing seam (3) and sealing seam area (4) is the same as in the first example.

Further, while the layer of a selectively permeable non-woven (1) is the same Tyvek^{®} 1073B as used in the first example, the first layer of film (2) consists in this example of a three layer blown film with shrink and peel properties. It has a layer of high density polyethylene followed by a layer of a compound containing high density polyethylene and 10 % by weight isotactic polybutylene-1 and a tie layer of an anhydride-modified ethylene vinyl acetate polymer arranged on the side facing the container. The blow up ratio has been 1:4.5 and the take-off ratio 1:3.5.

The container used in this example has been a tub made of polystyrene. When the sealing film is sealed onto the tub, there exist direct paths between the outer edges of the sealing film which do not have any openings in them because the circular cut patterns are arranged in spaced apart rows and columns. This way, the shrink of the sealing film which occurs during a steam sterilization process may re-tighten the film sufficiently. If the cut pattern were too dense without closed lines of film between the edges, the resulting effect of tightening may be insufficiently small. The same applies to the variant of the first example. For this type of sealing film it is, hence, recommended to use several smaller cut-out regions instead of the one large one if it is intended to provide them with the shrinking properties. For example, a 3x2 or 4x3 arrangement of sufficiently spaced apart cut-out regions is a good starting point for the fine-tuning of the effect.

### Reference numerals

- 1: layer of a selectively permeable non-woven
- 2: first layer of film
- 3: sealing seam
- 4: sealing seam area

## Claims

1. Sealing film for gas or vapor decontaminable packaging applications including a rigid container having an opening to be sealed with a film before decontamination, the sealing film consisting of or comprising at least in sequence from outside towards inside of the packaging
a) a layer of a selectively permeable non-woven (1) which is permeable for gases or vapors but essentially impermeable for microorganisms, thus forming a microbial barrier measured according to ASTM F1608-16 of 2-6 Log Reduction Value (LRV), and
b1) a first layer of film (2) having one or more predefined cut-out regions within an area of the sealing film which is to cover the opening of the container, or
b2) a first layer of film (2) being essentially impermeable for the decontaminating gas or vapor, having a first needling, perforation and/or cut pattern within the area of the sealing film which is to cover the opening of the container,
wherein the layer of a selectively permeable non-woven (1) a) and the first layer of film (2) b1) or b2) are bonded by a sealing seam (3) which is configured and arranged at least partially subject to and non-overlapping with a sealing seam area (4) for sealing the opening of the container, and
wherein the first layer of film (2) b1) or b2) has monoaxial or biaxial heat shrink properties, wherein the shrink in one or both directions is 20 %-55 % when determined according to DIN 55543-4:2017-03.

2. Sealing film according to claim 1, further comprising in sequence from outside towards inside of the packaging after the first layer b2)
c) an adhesive layer which can be activated by energy transmission, covering the entire surface of a layer underneath or being arranged in patterns,
d) a second layer of film being essentially impermeable for the decontaminating gas or vapor, having a second needling, perforation and/or cut pattern being incongruent with the first needling, perforation and/or pattern.

3. Sealing film according to claim 2, wherein activation of the adhesive layer by energy transmission can be effected through heat, UV irradiation, IR irradiation, induction, and/or microwave irradiation.

4. Sealing film according to claim 2 or 3, wherein the adhesive is a hot melt heat sealable adhesive system containing additives which are responsive to the energy transmission.

5. Sealing film according to one of the preceding claims, wherein the selectively permeable non-woven (1) is a flash spun plexifilamentary film-fibril structure or a spunbonded very fine filaments non-woven, wherein the diameter of the very fine filaments is in either case in the range of 0.5 - 10 µm.

6. Sealing film according to one of the preceding claims, wherein the selectively permeable non-woven (1) is made of high density polyethylene (HDPE), polypropylene (PP), or polyethylene terephthalate (PET).

7. Sealing film according to claims 2-6, wherein the second layer of film d) has monoaxial or biaxial heat shrink properties, and/or wherein the shrink of the second layer of film d) in one or both directions preferably is 20 %-55 %, more preferably 25 %-50 % or 30 %-45 % when determined according to DIN 55543-4:2017-03.

8. Sealing film according to one of the preceding claims, wherein the first layer of film (2) b1) or b2) and/or the second layer of film d) is a blown film which has been produced with a blow up ratio of 1:2.5 - 1:10, preferably 1:4 - 1:6, and/or with a take-off ratio of 1:2 - 1:8, preferably 1:3 - 1:5.

9. Sealing film according to one of the preceding claims, wherein the first layer of film (2) b1) or b2) or the second layer of film d) is made of a film comprising two or more layers.

10. Sealing film according to one of the preceding claims, wherein the first layer of film (2) b1) or b2) or the second layer of film d) is peelable.

11. Sealing film according to claim 10, wherein the first layer of film (2) b1) or b2) or the second layer of film d) comprises or consists of a layer comprising a polyolefin plastomer, isotactic polybutylene-1, and/or an ethylene propylene copolymer.

12. Sealing film according to one of the preceding claims, wherein the film of the first layer of film (2) b1) or b2) or the second layer of film d) comprises or is made of polyethylene, polypropylene, polyamide 6, polyethylene terephthalate or their blends and/or copolymers.

13. Use of a sealing film according to one of the preceding claims for steam decontaminated packaging of a container.

14. Packaging for decontaminated packaging of objects comprising a tub, optionally comprising a nest, or a tray, which is sealed with a sealing film according to one of claims 1 to 12, wherein the tub or tray preferably comprises or is made of polystyrene, high impact polystyrene, polyethylene, polycarbonate, polyethylene terephthalate - glycol copolymer, polypropylene, or polyvinyl-chloride or their blends and/or copolymers.

15. Use of a packaging according to claim 14 for decontaminated packaging of objects for medical, pharmaceutical or cosmetic uses.

## Patentansprüche

1. Versiegelungsfolie für gas- oder dampfdekontaminierbare Verpackungsanwendungen, mit einem starren Behälter mit einer Öffnung, die vor der Dekontamination mit einer Folie verschlossen wird, wobei die Versiegelungsfolie in der Folge von der Außenseite zur Innenseite der Verpackung aus mindestens den folgenden Schichten besteht oder diese aufweist:
a) eine Schicht aus einem selektiv durchlässigen Vliesstoff (1), der für Gase oder Dämpfe durchlässig, aber für Mikroorganismen im Wesentlichen undurchlässig ist und somit eine mikrobielle Barriere mit einem gemäß ASTM F 1608-16 gemessenen log-Reduktionswert (Log Reduction Value, LRV) von 2-6 bildet; und
b1) einer ersten Folienschicht (2) mit einem oder mehreren vordefinierten Ausschnittbereichen innerhalb eines Bereichs der Versiegelungsfolie, der die Öffnung des Behälters abdecken soll; oder
b2) einer ersten Folienschicht (2), die für das Dekontaminationsgas oder den Dekontaminationsdampf im Wesentlichen undurchlässig ist und innerhalb des Bereichs der Versiegelungsfolie, der die Öffnung des Behälters abdecken soll, ein erstes Nadelungs-, Perforations- und/oder Schnittmuster aufweist,
wobei die Schicht aus einem selektiv durchlässigen Vliesstoff (1) a) und die erste Folienschicht (2) b1) oder b2) durch eine Versiegelungsnaht (3) verbunden sind, die zumindest teilweise in Abhängigkeit von und nicht überlappend mit einem Versiegelungsnahtbereich (4) zum Versiegeln der Öffnung des Behälters konfiguriert und angeordnet ist, und
wobei die erste Folienschicht (2) b1) oder b2) monoaxiale oder biaxiale Wärmeschrumpfeigenschaften aufweist, wobei die Schrumpfung in einer oder beiden Richtungen, bestimmt gemäß DIN 55543-42017-03, 20%-55% beträgt.

2. Versiegelungsfolie nach Anspruch 1, die ferner in der Folge von außen zum Inneren der Verpackung nach der ersten Schicht b2) aufweist:
c) eine durch Energieübertragung aktivierbare Klebstoffschicht, die die gesamte Oberfläche einer darunterliegenden Schicht bedeckt oder in Mustern angeordnet ist,
d) eine zweite Folienschicht, die für das Dekontaminationsgas oder den Dekontaminationsdampf im Wesentlichen undurchlässig ist und eine zweite Nadelung, Perforation und/oder ein Schnittmuster aufweist, die bzw. das inkongruent zu der ersten Nadelung, der ersten Perforation und/oder dem ersten Schnittmuster ist.

3. Versiegelungsfolie nach Anspruch 2, wobei das Aktivieren der Klebstoffschicht durch Energieübertragung durch Wärme, UV-Bestrahlung, IR-Bestrahlung, Induktion und/oder Mikrowellenbestrahlung erfolgen kann.

4. Versiegelungsfolie nach Anspruch 2 oder 3, wobei der Klebstoff ein heißschmelzendes, heißsiegelbares Klebstoffsystem ist, das Additive enthält, die auf die Energieübertragung reagieren.

5. Versiegelungsfolie nach einem der vorhergehenden Ansprüche, wobei der selektiv durchlässige Vliesstoff (1) eine plexifilamentäre Flashspun-Film-Fibrillenstruktur oder ein Spinnvliesstoff mit sehr feinen Filamenten ist, wobei der Durchmesser der sehr feinen Filamente in beiden Fällen im Bereich von 0,5 bis 10 µm liegt.

6. Versiegelungsfolie nach einem der vorhergehenden Ansprüche, wobei der selektiv durchlässige Vliesstoff (1) aus hochdichtem Polyethylen (HDPE), Polypropylen (PP) oder Polyethylenterephthalat (PET) hergestellt ist.

7. Versiegelungsfolie nach einem der Ansprüche 2 bis 6, wobei die zweite Folienschicht d) monoaxiale oder biaxiale Wärmeschrumpfeigenschaften aufweist, und/oder wobei die Schrumpfung der zweiten Folienschicht d) in einer oder beiden Richtungen, bestimmt nach DIN 55543-42017-03, vorzugsweise 20%-55% und bevorzugter 25%-50% oder 30%-45% beträgt.

8. Versiegelungsfolie nach einem der vorhergehenden Ansprüche, wobei die erste Folienschicht (2) b1) oder b2) und/oder die zweite Folienschicht d) eine Blasfolie ist, die mit einem Aufblasverhältnis von 1:2.5 - 1:10, vorzugsweise 1:4 - 1:6, und/oder mit einem Abhebeverhältnis von 1:2 - 1:8, vorzugsweise 1,3 - 1:5 hergestellt worden ist.

9. Versiegelungsfolie nach einem der vorhergehenden Ansprüche, wobei die erste Folienschicht (2) b1) oder b2) oder die zweite Folienschicht d) aus einer Folie besteht, die zwei oder mehr Schichten aufweist.

10. Versiegelungsfolie nach einem der vorhergehenden Ansprüche, wobei die erste Folienschicht (2) b1) oder b2) oder die zweite Folienschicht d) abziehbar ist.

11. Versiegelungsfolie nach Anspruch 10, wobei die erste Folienschicht (2) b1) oder b2) oder die zweite Folienschicht d) eine Schicht aufweist oder aus einer Schicht besteht, die ein Polyolefinplastomer, isotaktisches Polybutylen-1 und/oder ein Ethylen-Propylen-Copolymer aufweist.

12. Versiegelungsfolie nach einem der vorhergehenden Ansprüche, wobei die Folie der ersten Folienschicht (2) b1) oder b2) oder der zweiten Folienschicht d) Polyethylen, Polypropylen, Polyamid 6, Polyethylenterephthalat oder deren Mischungen und/oder Copolymere aufweist oder daraus besteht.

13. Verwendung einer Versiegelungsfolie nach einem der vorhergehenden Ansprüche zum dampfdekontaminierten Verpacken eines Behälters.

14. Verpackung zum dekontaminierten Verpacken von Gegenständen, mit einer Wanne, die gegebenenfalls eine Nestung aufweist, oder einer Schale, die mit einer Versiegelungsfolie nach einem der Ansprüche 1 bis 12 versiegelt ist, wobei die Wanne oder Schale vorzugsweise Polystyrol, hochschlagfestes Polystyrol, Polyethylen, Polycarbonat, Polyethylenterephthalat-Glykol-Copolymer, Polypropylen oder Polyvinylchlorid oder deren Mischungen und/oder Copolymere aufweist oder daraus besteht.

15. Verwendung einer Verpackung nach Anspruch 14 zum dekontaminierten Verpacken von Gegenständen für medizinische, pharmazeutische oder kosmetische Anwendungen.

## Revendications

1. Film d'étanchéité pour des applications d'emballage décontaminable par gaz ou vapeur comprenant un récipient rigide ayant une ouverture à sceller avec un film avant décontamination, le film d'étanchéité consistant en ou comprenant au moins dans l'ordre de l'extérieur vers l'intérieur de l'emballage
a) une couche de non-tissé sélectivement perméable (1) qui est perméable aux gaz ou aux vapeurs mais essentiellement imperméable aux micro-organismes, formant ainsi une barrière microbienne mesurée selon la norme ASTM F 1608-16 de 2-6 Log Reduction Value (LRV), et
b1) une première couche de film (2) comportant une ou plusieurs régions de découpe prédéfinies dans une zone du film d'étanchéité destinée à recouvrir l'ouverture du récipient, ou
b2) une première couche de film (2) essentiellement imperméable au gaz ou à la vapeur de décontamination, présentant un premier motif d'aiguilletage, de perforation et/ou de découpe dans la zone du film d'étanchéité qui est destiné à recouvrir l'ouverture du récipient,
dans lequel la couche de non-tissé sélectivement perméable (1) a) et la première couche de film (2) b1) ou b2) sont liées par une couture de scellement (3) qui est configurée et disposée au moins partiellement sous réserve d'une zone de couture de scellement (4) pour sceller l'ouverture du récipient, et ne se chevauchant pas avec cette zone, et
dans lequel la première couche de film (2) b1) ou b2) présente des propriétés de thermorétraction monoaxiale ou biaxiale,
dans lequel la rétraction dans une ou les deux directions est de 20 %-55 % lorsqu'elle est déterminée conformément à la norme **DIN** 55543-4:2017-03.

2. Film d'étanchéité selon la revendication 1, comprenant en outre, dans l'ordre, de l'extérieur vers l'intérieur de l'emballage, après la première couche b2)
c) une couche adhésive qui peut être activée par transmission d'énergie, couvrant toute la surface d'une couche située en dessous ou étant disposée selon des motifs,
d) une deuxième couche de film essentiellement imperméable au gaz ou à la vapeur de décontamination, présentant un deuxième motif d'aiguilletage, de perforation et/ou de découpe incongru par rapport au premier motif d'aiguilletage, de perforation et/ou de découpe.

3. Film d'étanchéité selon la revendication 2, dans lequel l'activation de la couche adhésive par transmission d'énergie peut être effectuée par la chaleur, l'irradiation UV, l'irradiation IR, l'induction et/ou l'irradiation par micro-ondes.

4. Film d'étanchéité selon la revendication 2 ou 3, dans lequel l'adhésif est un système d'adhésif thermoscellable thermofusible contenant des additifs qui réagissent à la transmission d'énergie.

5. Film d'étanchéité selon l'une des revendications précédentes, dans lequel le non-tissé sélectivement perméable (1) est une structure de film-fibrille plexifilamentaire à filage flash ou un non-tissé à filaments très fins filés-liés, dans lequel le diamètre des filaments très fins est dans les deux cas de l'ordre de 0,5 - 10 µm

6. Film d'étanchéité selon l'une des revendications précédentes, dans lequel le non-tissé sélectivement perméable (1) est fabriqué en polyéthylène haute densité (PEHD), en polypropylène (PP) ou en polyéthylène téréphtalate (PET).

7. Film d'étanchéité selon les revendications 2 à 6, dans lequel la deuxième couche du film d) présente des propriétés de thermorétraction monoaxiale ou biaxiale, et/ou dans lequel la rétraction de la deuxième couche de film d) dans une ou les deux directions est de préférence de 20 %-55 %, plus préférentiellement de 25 %-50 % ou de 30 %-45 % lorsqu'elle est déterminée selon la norme DIN 55543-4:2017-03.

8. Film d'étanchéité selon l'une des revendications précédentes, dans lequel la première couche de film (2) b1) ou b2) et/ou la deuxième couche de film d) est un film soufflé qui a été produit avec un rapport de soufflage de 1:2,5 - 1:10, de préférence 1:4 - 1:6, et/ou avec un rapport de décollage de 1:2 - 1:8, de préférence 1:3 - 1:5

9. Film d'étanchéité selon l'une des revendications précédentes, dans lequel la première couche de film (2) b1) ou b2) ou la deuxième couche de film d) est formée d'un film comprenant deux ou plusieurs couches

10. Film d'étanchéité selon l'une des revendications précédentes, dans lequel la première couche de film (2) b1) ou b2) ou la deuxième couche de film d) est pelable.

11. Film d'étanchéité selon la revendication 10, dans lequel la première couche de film (2) b1) ou b2) ou la deuxième couche de film d) comprend ou consiste en une couche comprenant un plastomère de polyoléfine, du polybutylène-1 isotactique, et/ou un copolymère d'éthylène et de propylène.

12. Film d'étanchéité selon l'une des revendications précédentes, dans lequel le film de la première couche du film (2) b1) ou b2) ou de la deuxième couche du film d) comprend ou est formé de polyéthylène, de polypropylène, de polyamide 6, de polyéthylène téréphtalate ou de leurs mélanges et/ou copolymères.

13. Utilisation d'un film de scellage selon l'une des revendications précédentes pour l'emballage d'un récipient décontaminé à la vapeur.

14. Emballage pour le conditionnement décontaminé d'objets comprenant un bac, comprenant éventuellement un nid, ou un plateau, qui est scellé avec un film d'étanchéité selon l'une des revendications 1 à 12, dans lequel le bac ou le plateau comprend de préférence ou est fabriqué en polystyrène, polystyrène à haute résistance aux chocs, polyéthylène, polycarbonate, copolymère de polyéthylène téréphtalate - glycol, polypropylène, ou polychlorure de vinyle ou leurs mélanges et/ou copolymères.

15. Utilisation d'un emballage selon la revendication 14 pour un emballage décontaminé d'objets à usage médical, pharmaceutique ou cosmétique.
